# EUROPÄISCHE PATENTANMELDUNG

(11) **EP 3 492 170 A1**
(43) Veröffentlichungstag der Anmeldung: **05.06.2019**
(21) Anmeldenummer: 17204819.1
(22) Anmeldetag: 30.11.2017
(51) Int. Cl.: B01J 37/02, B01J 23/06, B01J 27/04, B01J 35/00, B01D 53/00

(54) **PHOTOKATALYTISCHE BESCHICHTUNGEN MIT SULFIDISCHEN HALBLEITERN**

(60) Teilanmeldung: 19157955.6
(71) Anmelder: STO SE & Co. KGaA, 79780 Stühlingen (DE)
(72) Erfinder: Weh, Walter, 78647 Trossingen (DE); Van Leeuwen, Jack, 4800 Zofingen (CH); Burgeth, Gerald, 79805 Eggingen (DE)
(74) Vertreter: Gottschalk, Matthias

(57) **Zusammenfassung**

Die vorliegende Erfindung betrifft photokatalytische Beschichtungsmaterialien. Insbesondere betrifft die vorliegende Erfindung ein Beschichtungsmaterial, umfassend mindestens ein organisches Bindemittel, mindestens einen sulfidischen photokatalytisch wirksamen Halbleiter sowie wenigstens einen Füllstoff und/oder ein Pigment, wobei das Beschichtungsmaterial im Wesentlichen frei von Titandioxid ist. Die Erfindung betrifft auch die Verwendung derartiger Beschichtungsmaterialien zum Abbau von in Atmosphärenluft enthaltenen Schadgasen wie insbesondere Methan.

## Beschreibung

Die vorliegende Erfindung betrifft photokatalytische Beschichtungsmaterialien. Insbesondere betrifft die vorliegende Erfindung ein Beschichtungsmaterial, umfassend mindestens ein organisches Bindemittel, mindestens einen sulfidischen photokatalytisch wirksamen Halbleiter sowie wenigstens einen Füllstoff und/oder ein Pigment, wobei das Beschichtungsmaterial im Wesentlichen frei von Titandioxid ist. Die Erfindung betrifft auch die Verwendung derartiger Beschichtungsmaterialien zum Abbau von in Atmosphären- und/oder Umgebungsluft enthaltenen Schadgasen wie insbesondere Methan.

### Hintergrund der Erfindung

Im Folgenden werden die Begriffe "Beschichtungsmaterial", "Beschichtungszusammensetzung" und "Beschichtungsmasse" synonym verwendet, und können auch eine daraus erzeugte oder erzeugbare "Beschichtung" bezeichnen. Diese Bezeichnungen werden, sofern nicht ausdrücklich anders angegeben, unabhängig vom Wassergehalt verwendet und bezeichnen jede Mischung der erfindungsgemäß verwendeten Substanzen vor, während und nach der bestimmungsgemäßen Verwendung, auch bei unterschiedlichen Wassergehalten.

Photokatalytische Beschichtungen von Oberflächen, insbesondere von Aussenfassaden von Bauten, sind Beschichtungen, welche einen Photokatalysator enthalten, dessen Aktivität bestimmte Eigenschaften der Beschichtung beeinflussen kann. So werden derartige Beschichtungen zur Erzeugung einer selbstreinigenden Oberfläche verwendet und/oder sie dienen dem Abbau von Schadgasen aus der Umgebungsluft.

Photokatalytische Beschichtungen sind im Stand der Technik bekannt. Beispielsweise beschreibt die EP 1 735 372 ein Beschichtungsmaterial mit einem Bindemittel und mit einem Füllstoff, der Teilchen mit einer Größe und/oder Oberflächenrauigkeit von 100 µm oder weniger aufweist, sowie mit einem photokatalytisch wirksamen Mittel, wobei das Bindemittel zumindest teilweise durch die photokatalytische Wirkung abgebaut wird und eine mikrostrukturierte, selbstreinigende Oberfläche entsteht.

EP 1 753 831 beschreibt Beschichtungsmaterialien mit einem Bindemittel und einem Photokatalysator aus TiO₂, das mit Kohlenstoff und/oder Schwefel oberflächenmodifiziert ist und dadurch auch mit sichtbarem Licht photokatalytisch aktiv ist. Die Beschichtung soll Aktivität gegen bioziden Bewuchs zeigen.

Die deutsche Gebrauchsmusterschrift DE 203 06 431 beschreibt eine Photokatalysator-haltige Beschichtungsmasse, die zementfrei ist und eine Calciumsulfat-Komponente beinhaltet. Das Calciumsulfat ist hier als Bindemittelbestandteil zu betrachten. Solche Beschichtungen sind als photokatalytische Gips-Putze bekannt, können jedoch wegen der niedrigen Witterungsbeständigkeit nicht im Außenbereich eingesetzt werden, da CaSO₄ als das verwendete Bindemittel dafür zu wenig "Bindekraft" hat und zu stark wasserlöslich ist.

Aus DE 102005013259 A1 sind photokatalytisch aktive Zusammensetzungen bekannt, die neben TiO₂ Zinkoxid enthalten. Oxidische Halbleiter offenbart auch EP 0903389 A1.

Aus EP 1735372 A1 und EP 2722370 A1 sind Zusammensetzungen bekannt, die neben TiO₂ Metallsulfide wie Zinksulfid (ZnS) enthalten. Dabei steht die Verwendung von TiO₂ als Photokatalysator im Vordergrund. Zinksulfid wird auch in EP 1809707 erwähnt.

Ein im Stand der Technik bekanntes Problem solcher Zusammensetzungen ist die sogenannte "Kreidung" oder "Verkreidung". Kreidung bezeichnet den oberflächigen Zerfall der Beschichtung, bei dem Teilchen, insbesondere Katalysatorteilchen, aus dem Verbund der Zusammensetzungs-Matrix herausgelöst werden. Kreidung ist nicht nur relevant im Außenbereich, wo die Beschichtungen der natürlichen Witterung und starker UV-Strahlung ausgesetzt sind. Kreidung spielt insbesondere auch bei Innenraumfarben eine Rolle und ist absolut unerwünscht. Obwohl in Innenräumen relativ wenig für die Photokatalyse geeignetes natürliches UV-Licht vorhanden ist, ist dieses meist ausreichend für die gewünschten photokatalytischen Reaktionen. V.a. im Laibungsbereich an Fenstern darf es nicht zur Kreidung kommen.

Im Stand der Technik wird wiederholt behauptet, dass wegen der Kreidungs-Problematik photokatalytische Beschichtungsmassen nicht organisch, auf Basis von Polymerdispersionen gebunden sein dürfen, sondern rein mineralisch, anorganisch - beispielsweise auf Basis von Wasserglas - gebunden sein müssen. Diese Ansicht ist oft in der Literatur zu finden, wie beispielsweise in Absatz [0007] der EP 1 809 707 B1:

"Problematisch an der Verwendung photokatalytisch aktiver Pigmente, insbesondere des kostengünstigen Anatas in Beschichtungsmassen, welche organische Bindemittel enthalten, ist, dass das organische Bindemittel, in der Regel eine polymere Verbindung, durch die photokatalytischen Effekte angegriffen und dabei das organische Bindemittel abgebaut wird. Als Folge dieses Prozesses werden Pigment- und Füllstoffpartikel an der Oberfläche der Beschichtungsmasse freigelegt, was zum unerwünschten Phänomen der sogenannten Kreidung führt (siehe hierzu R. Benedix et al., Lacer No. 5, 2000, Seite 161 sowie R. Baumstark und M. Schwanz, Dispersionen für Bautenfarben, Acrylatsysteme in Theorie und Praxis, Seite 64, Curt R. Vincentz Verlag, Hannover, 2001). Auch ist bekannt, dass diese Beschichtungsmassen verstärkt zu Vergilbungsreaktionen neigen. Diese Effekte verhindern bislang den Einsatz organischer Bindemittel in diesem Arbeitsgebiet und erfordern die Verwendung von rein anorganischen Bindemitteln, wie beispielsweise Wasserglas, die keinem solchen Abbau unterliegen [siehe beispielsweise die japanische Patentanmeldung mit der Anmeldenummer 10-309419 (Nippon Paint Co. Ltd.)]."

Als Alternative zu organischen Bindemitteln werden daher silikatische Bindemittel in Betracht gezogen. Silikatische Bindemittel können nicht weiter oxidiert werden, da sich Si bereits in der Oxidationsstufe IV befindet. Da jedoch bei der Photokatalyse (insbesondere an Titandioxid) sehr nukleophile und siliciumphile Sauerstoff-Spezies (wie OH-Radikale oder O₂⁻, etc.) entstehen, werden die Si-O-Si-Bindungen sehr schnell angegriffen. Es kommt zu nukleophilen Substitutionsreaktionen, und das Silikat-Netzwerk wird zerstört. Die Folge ist eine massive Photokorrosion der gesamten Bindemittelmatrix. Chemisch zu vergleichen sind diese Vorgänge mit einem alkalischen Aufschluss von Silikaten. Um dieser Photokorrosion entgegen zu wirken, setzen die Hersteller solcher silikatischen Beschichtungsmassen oft weniger TiO₂ als Photokatalysator ein, mit der Folge, dass die photokatalytische Aktivität dieser Beschichtungen insgesamt sehr schlecht ist. Hinzu kommt, dass das Wasserglas sehr gut an das TiO₂ bindet, so dass unter Umständen das TiO₂-Katalysatorpartikel beschichtet und eingekapselt wird. Dies führt zu einer weiteren Minderung der photokatalytischen Aktivität. Ein derartiges Beschichten von TiO₂ mit Silikaten wird auch gezielt eingesetzt, um pigmentäres TiO₂ zu "stabilisieren" und so dessen photokatalytische Wirksamkeit zu vermindern. Die hier unerwünschte photokatalytische Aktivität wird durch das Behandeln mit Silikat unterdrückt.

Als weitere Alternative zu organischen Bindemitteln kommen zementgebundene Beschichtungsmaterialien in Betracht. Zementgebundene Beschichtungsmassen, die in der Regel dickschichtig aufgebracht werden, zeigen üblicherweise ebenfalls geringe photokatalytische Aktivität, da meist nur sehr wenig des teuren Rohstoffs TiO₂ eingesetzt wird. Der größte Anteil des Photokatalysators verschwindet in der Tiefe der Beschichtung und ist für photokatalytische Prozesse, die nur oberflächennah auftreten, verloren. Außerdem bildet sich durch die fortlaufende Carbonatisierung von zementösen Beschichtungsmassen eine oberflächennahe CaCO₃-Schicht, die die Photokatalyse negativ beeinträchtigt.

Es ist daher ein empfindlicher Nachteil, bei photokatalytisch aktiven Beschichtungszusammensetzungen auf organische Bindemittel verzichten zu müssen, zumal die oben behandelten Alternativen die Vorteile organischer Bindemittel nicht aufweisen. Es ist daher sehr wünschenswert, über eine Beschichtungszusammensetzung auf Basis organischer Bindemittel verfügen zu können, die die genannten Probleme nicht zeigt, aber dennoch eine gute photokatalytische Aktivität aufweist.

Zudem zeigen die bekannten Zusammensetzungen mit TiO₂ als Photokatalysator Nachteile beim Abbau wenig reaktiver VOCs wie etwa Methan und anderer, insbesondere homologer unpolarer Kohlenwasserstoffe.

Die Verwendung von TiO₂ in den bekannten Zusammensetzungen beruht vor allem auf der Effizienz dieses Photokatalysators. In einer optimierten Formulierung haben Beschichtungen mit aktivem TiO₂ recht hohe photokatalytische Aktivitäten. D.h. sie bauen Luftschadstoffe wie VOCs und / oder Stickoxide recht effizient ab. Dieser Abbau verläuft an TiO₂ über hochoxidative Spezies, meist OH-Radikale. Diese OH-Radikale sind sehr unselektiv und reagieren nach ihrer Bildung mit dem nächsten Reaktionspartner, auf den sie treffen. OH-Radikale reagieren mit fast allen oxidierbaren Stoffen sehr schnell.

Jedoch reagieren OH-Radikale mit dem symmetrischen, unpolaren Methan nur sehr langsam. Die Geschwindigkeitskonstante der bimolekularen Reaktion der OH-Radikale mit CH₄ in der Gasphase liegt bei ca. 3,55*10⁶ L * mol⁻¹ * s⁻¹ bei 295K (Gierczak et. al., J. Phys. Chem A 101 (1997) 3125). Noch langsamer wird Methan (CH₄) an Ti02 - Oberflächen abgebaut. An Ti02 - haltigen photokatalytischen Beschichtungen wird Methan nicht oder kaum bestimmbar abgebaut, auch weil das unpolare CH₄ an die sehr polare, mit OH-Gruppen besetzte TiO₂ - Oberfläche sehr schlecht adsorbiert.

OH-Radikale sind sehr unselektiv. Sie oxidieren auch die polymeren Bindemittel. Obwohl ihre Reichweite nur begrenzt ist, zerstören sie die Bindemittel-Matrix um ein TiO₂-Photokatalysatorpartikel herum, das TiO₂-Partikel verliert den Halt und fällt aus der Matrix heraus. Dies ist wahrscheinlich die Ursache für die im Stand der Technik beobachtete und oben erörterte Kreidung.

Bei TiO₂-basierten photokatalytischen Beschichtungszusammensetzungen muss daher ein ausgewogenes Maß zwischen der Aktivität und der Stabilität der Beschichtung gefunden werden, was nicht einfach ist. Man kann weniger aktive Ti02- Katalysatoren verwenden oder die Konzentration an Ti02-Katalysator vermindern, was zwar (indirekt!) zu einer Steigerung der Stabilität der Beschichtung führt, aber gleichzeitig die Leistung hinsichtlich des Abbaus von Luftschadstoffen verringert.

Es besteht daher ein Bedarf an einem Beschichtungsmaterial, das einerseits gegen in der Umgebungsluft enthaltenen Schadgase, insbesondere Methan und ähnliche Kohlenwasserstoffe, eine hohe Aktivität aufweist und andererseits für eine Verwendung im Außenbereich, und auch im Innenbereich, ausreichend witterungsbeständig und langlebig ist. Insbesondere soll das Beschichtungsmaterial organische Bindemittel umfassen können, aber dennoch den bekannten Verkreidungsproblemen nicht, oder jedenfalls nicht in relevantem Umfang unterliegen. Der vorliegenden Erfindung liegt die Aufgabe zugrunde, ein derartiges Beschichtungsmaterial bereitzustellen.

### Zusammenfassung der Erfindung

Die Erfindung beruht auf der Feststellung, dass sich die oben beschriebenen Probleme ganz oder jedenfalls weitgehend vermeiden lassen, wenn auf die Verwendung von TiO₂ in den hier betroffenen Beschichtungszusammensetzungen verzichtet und stattdessen ein sulfidischer, photokatalytisch aktiver Halbleiter verwendet wird. Hierfür eignet sich besonders Zinksulfid (ZnS).

Ohne an eine spezifische Theorie gebunden sein zu wollen, hat dies wahrscheinlich folgenden Hintergrund: An oxidischen Halbleitern, im Besonderen an Ti02, werden als hochoxidative Spezies die OH-Radikale gebildet. Das liegt zum einen daran, dass die OH-Radikale aus chemisorbierten und physisorbierten Wasser gebildet werden, sprich aus den Oberflächen-OH-Gruppen, die es auf oxidischen Halbleitern (besonders bei TiO₂) sehr zahlreich gibt. Zinksulfid als nicht-oxidischer Halbleiter hat wesentlich weniger Oberflächen-OH-Gruppen. Deswegen ist es schon aus diesem Grund unwahrscheinlicher, dass sehr effizient OH-Radikale an ZnS gebildet werden.

Zum anderen ist die Lage des Valenzbandes des ZnS bei neutralen oder basischem pH-Werten nicht mehr ausreichend anodisch für die Bildung der OH-Radikale. Bei pH = 7 liegt beim Zinksulfid die Valenzbandkante bei ca. +1.8V . Das Redoxpotential für OH / OH⁻ (bzw. H₂O) liegt bei ca. +2.8V gegen Normalwasserstoffelektrode und damit deutlich unterhalb der Valenzbandkante des ZnS. Eine oxidative Generierung von OH-Radikalen aus den Oberflächen-OH-Gruppen oder Wasser ist thermodynamisch nicht möglich.

Dagegen ist dies bei vielen oxidischen Halbleitern, v.a. bei Ti02 sehr gut möglich, wie es in folgender Abbildung schön zu erkennen ist:

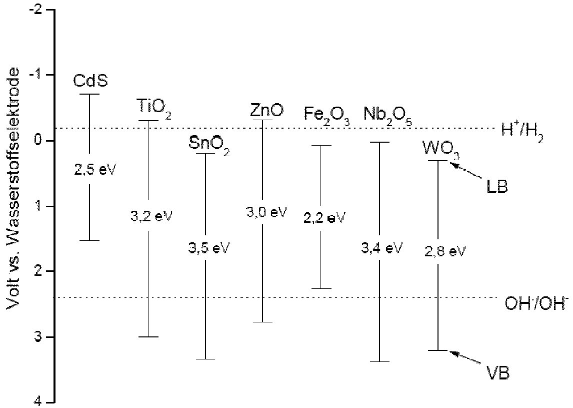

**Bandlückenenergien der typischen Halbleiter bei pH = 7** *(*M. Miyauchi, A. Nakajima, T. Watanabe and K. Hashimoto, Chemistry of Materials, 14(6), 2812-2816, 2002*.* P. V. Kamat, Chem. Rev., 93, 267 - 300, 1993.)

Methan ist zwar in der Praxis meist kein Problem-Schadstoff, aber es ist ein bedeutendes Treibhausgas. Methan wird aus der Gruppe der VOC oft ausgenommen. Die VOCs werden auch häufig als NMVOC bezeichnet (NON METHAN VOLATILE ORGANIC COMPOUND) Folglich kann daraus abgeleitet werden, dass Methan eine besondere Bedeutung in der Atmosphärenchemie zukommt.

Methan wird zwar an ZnS recht langsam abgebaut, aber besser als an TiO₂. Auch der Abbau von anderen organischen und anorganischen Schadstoffen (VOC, NOx) erfolgt an Zinksulfid, wenn auch langsamer als an TiO₂.

Da die Reaktionen im Falle des ZnS nicht über OH-Radikale verlaufen können, werden andere Reaktionsschritte postuliert. Möglicherweise ist der reduktive

Teilschritt der maßgebliche Prozess: die Reduktion des Luftsauerstoffs mit dem Elektron des Elektron-Loch - Paares, das bei Bestrahlung des Photokatalysators gebildet wird, zum O₂⁻ - Ion, das ebenfalls hochreaktiv ist.

*e⁻* + *O₂* →*O₂⁻*

*O₂⁻* + *CH₄ (oder andere VOC)* → → → → *CO₂* + *H₂O*

Alternativ könnte vom gebildeten Elektron-Loch - Paar ein Energieübertrag auf das Sauerstoffmolekül erfolgen und Singulett-Sauerstoff gebildet werden, der ebenfalls hochreaktiv ist (starkes Oxidationsmittel).

Die vorliegende Erfindung stellt zur Lösung der genannten Aufgaben ein Beschichtungsmaterial bereit, umfassend
(a) mindestens ein organisches Bindemittel,
(b) mindestens einen sulfidischen photokatalytisch wirksamen Halbleiter und
(c) mindestens einen Füllstoff und/oder ein Pigment, wobei
(d) das Beschichtungsmaterial im Wesentlichen kein TiO₂ enthält.

"Im Wesentlichen" bedeutet im Kontext dieser Erfindung einen Gehalt von weniger als 1 Gew.%, vorzugsweise weniger als 0.5 Gew.% , mehr bevorzugt weniger als 0.2 Gew.%, noch mehr bevorzugt weniger als 0.1 Gew.%, speziell weniger als 0.05 Gew.%, noch spezieller weniger als 0.01 Gew.%, alles bezogen auf das Gesamtgewicht der Trockenbestandteile des Beschichtungsmaterials. Besonders bevorzugt bedeutet "im Wesentliche kein", dass innerhalb der üblichen nasschemischen Nachweisgrenzen (Titration nach Neumann und Murphy) kein TiO₂ enthalten ist.

Die erfindungsgemäßen Beschichtungsmaterialien sind geeignet zum photokatalytischen Abbau von in Atmosphärenluft enthaltenen Schadgasen, z.B. Methan und Stickoxiden, wie etwa NO und NO₂. Dabei zeigen die Beschichtungsmaterialien der Erfindung eine hohe Aktivität selbst bei Verwendung relativ geringer Mengen an photokatalytisch wirksamem Mittel. Daher betrifft die vorliegende Erfindung auch die Verwendung eines Beschichtungsmaterials wie vorstehend definiert zum Abbau von in Atmosphärenluft enthaltenen Schadgasen, insbesondere Methan, homologen Kohlenwasserstoffen und Stickoxiden, wie etwa NO oder NO₂.

Anstelle von oxidischen Halbleitern (meist Ti02) werden gemäß der Erfindung sulfidische Halbleiter als Photokatalysator in Beschichtungszusammensetzungen eingesetzt. Als sulfidischer Halbleiter wird Zinksulfid bevorzugt, gleich in welcher Modifikation oder Kristallstruktur (Zinkblende oder Wurtzit), wobei synthetisches Zinksulfid besonders bevorzugt wird.

Als Bindemittel können die bekannten organischen Bindemittel (meist Polymerdispersionen, sowie auch Reaktivbindemittel wie Polyurethan- oder Epoxy-Bindemittel) eingesetzt werden. Zusätzlich können auch anorganische mineralische Bindemittel wie Wasserglas oder Zement etc. eingesetzt werden. Die Bindemittelauswahl ist weit weniger beschränkt als bei TiO2-Photokat-Beschichtungen, denn bei organischen Polymerbindemitteln muss nicht mehr auf deren Oxidationsempfindlichkeit gegenüber OH-Radikalen geachtet werden.

Die Beschichtungszusammensetzung enthält wenigstens ein (weiteres) Pigment und/oder wenigstens einen (weiteren) Füllstoff.

Bisher konnten nur oxidationsstabile anorganische Farbpigmente verwendet werden. Bei der erfindungsgemäßen Verwendung von sulfidischen Halbleitern, insbes. ZnS, können auch weniger oxidationsstabile organische Buntpigmente und Farbstoffe verwendet werden.

Auch bei den Füllstoffen gibt es keine Einschränkung. Es könne alle herkömmlichen Füllstoffe (silikatische, carbonatische, sulfatische, oxidische, hydroxidische Füllstoffe, etc.) verwendet werden.

Bevorzugte Ausführungsformen der Erfindung sind in der folgenden Beschreibung und den angefügten Ansprüchen offenbart.

### Detaillierte Beschreibung der Erfindung

Die vorliegende Erfindung stellt ein Beschichtungsmaterial bereit, umfassend
(a) mindestens ein organisches Bindemittel,
(b) mindestens einen sulfidischen photokatalytisch wirksamen Halbleiter und
(c) mindestens einen Füllstoff und/oder ein Pigment, wobei
(d) das Beschichtungsmaterial im Wesentlichen kein TiO₂ enthält.

In einer bevorzugten Ausführungsform umfasst der sulfidische Halbleiter Zinksulfid (ZnS). In einer stärker bevorzugten Ausführungsform umfasst der sulfidische Halbleiter ein synthetisches Zinksulfid.

In anderen Ausführungsformen umfasst der sulfidische Halbleiter ein natürlich vorkommendes Zinksulfid (dann meist in ausreichend gereinigter Form und von weisser Farbe), etwa Zinkblende oder Wurtzit.

Die Teilchengröße des sulfidischen Halbleiters entspricht vorzugsweise den im Stand der Technik als Pigment eingesetzten Sulfiden, insbesondere Zinksulfid-Weißpigment.

Das Beschichtungsmaterial der vorliegenden Erfindung enthält wenigstens einen Füllstoff und/oder wenigstens ein Pigment, bei denen es sich nicht um den Photokatalysator, also z. B. Zinksulfid handelt. Im Stand der Technik ist eine Vielzahl solcher weiteren Füllstoffe bekannt. Beispiele davon schließen Aluminiumhydroxid, Sand, CaCO₃, und silikatische Füllstoffe ein.

Das Beschichtungsmaterial der vorliegenden Erfindung enthält ferner als wesentlichen Bestandteil ein organisches Bindemittel.

Durch die erfindungsgemäße Verwendung eines sulfidischen Photokatalysators statt des bekannten Titandioxids wird die Kreidung unterdrückt, soweit sie durch den Gehalt an Photokatalysator bedingt ist.

Organische Bindemittel, die für erfindungsgemäße Beschichtungsmaterialien geeignet sind, sind im Stand der Technik bekannt. In bevorzugten Ausführungsformen ist das organische Bindemittel ausgewählt aus Polymerdispersionen, Redispergiermitteln, Alkydharzen, Polyurethanen, Epoxidharzen, Silikonharzen, Silanen, Siloxanen , Polysiloxanen und Gemischen davon. Vorzugsweise wird das organische Bindemittel ausgewählt aus Mischpolymerisaten aus Acryl- und Methacrylsäureestern mit Styrol oder Ethylen-Vinylestern, Acrylaten, Styrolacrylaten und anderen ähnlichen Polymerisaten oder Mischpolymerisaten. Besonders bevorzugte organische Bindemittel sind ein Silikonharz, ein Polyvinylacetat, ein Polyvinylacetat-Vinylester, ein Styrol-Acrylat-Bindemittel, eine Polyurethan-Dispersion, eine OH-funktionale Dispersion, eine Alkydharz-Emulsion, ein Epoxidharz, ein Ethylen-Vinylester-Terpolymer Bindemittel sowie Gemische davon oder ein zweikomponentiges Bindemittel aus einem vernetzbaren Polyacrylat und einem aliphatischen Polyisocyanat. Die Beschichtungsmaterialien der vorliegenden Erfindung können ein einziges organisches Bindemittel oder ein Gemisch von verschiedenen organischen Bindemitteln enthalten.

Zusätzlich zu dem organischen Bindemittel kann die erfindungsgemäße Beschichtungszusammensetzung ein oder mehrere anorganische Bindemittel enthalten. Vorzugsweise handelt es sich dabei um Wasserglas, insbes. Kaliwasserglas oder ein Sol-Silikat.

Bei photokatalytisch aktiven Beschichtungsmassen ist es bevorzugt, dass es sich um eine überkritische Formulierung handelt. D.h. die Pigment-Volumen - Konzentration liegt über der kritischen PVK, die in der Regel bei ca. 55 - 65 % liegt. Der Photokatalysator zählt dabei als Pigment. Damit wird die Wahrscheinlichkeit erhöht, dass Photokatalysator-Partikel an der Beschichtungsoberfläche (und nicht eingepackt im Bindemittel) liegen und dass Licht, Methan sowie andere Schadstoffe, und Sauerstoff Zugang zum Photokatalysator haben.

Die PVK sollte deshalb zwischen 50 und 99 % liegen, bevorzugter zwischen 55 und 98 %, noch bevorzugter zwischen 60 und 95 %.

Die KPVK wird experimentell bestimmt über die Methode der Filmspannung, die bei der KPVK am größten ist. Bei einer einseitigen Beschichtung von dünner PVC-Folie baut sich bei Trocknung des Anstrichstoffs die Filmspannung auf und äußert sich durch Krümmung der Folie. Je stärker die Krümmung, desto größer die Filmspannung. Bei der stärksten Krümmung liegt die KPVK (siehe auch Anhang). Die Methode ist dem Fachmann bekannt und gehört zu seiner Routine, Ferner ist die Methode beschrieben in Detlef Gysau, Füllstoffe, Hannover, Vincenz Network, 2005 oder Dörr, H. et al. "KRONOS Titandioxid in Dispersionsfarben", Kronos Titan-GmbH, Leverkusen, 1989.

Die PVK (EN ISO 4618-1) gibt das Volumenverhältnis zwischen Pigmenten und/oder Füllstoffen einerseits und dem Bindemittel andererseits im Beschichtungsfilm wieder.

Zur Charakterisierung der hier einschlägigen Beschichtungszusammensetzungen kann auch die Photokatalysator-Volumen-Konzentration (PhVK) dienen.

Die PhVK ist in Analogie zur PVK definiert als:
PhVK = 100% * Volumen (Photokatalysator) / (Volumen)
(Photokatalysator)+Volumen (Pigmente und Füllstoffe)+Volumen (Bindemittel))

Die PhVK gibt ähnlich der PVK die Wahrscheinlichkeit an, mit der ein Photokatalysator-Partikel zugänglich an der Oberfläche der Beschichtung liegt, anstatt von der Beschichtung umschlossen (und damit verschattet bzw. abgedeckt) zu sein.

In bevorzugten Ausführungsformen liegt die PhVK zwischen wenigstens 2% und 25%, vorzugsweise zwischen 3% und 20%, mehr bevorzugt zwischen 4% und 15%, und am meisten bevorzugt zwischen 5% und 12%. Wenn die PhVK unterhalb 3% liegt, ist im Rahmen der Messgenauigkeit meist keine photokatalytische Aktivität mehr feststellebar. Bei etwa 3% springt die photokatalytische Aktivität in den meisten Fällen an und nimmt dann mit steigender PhVK weiter zu.

Die Zusammensetzung benötigt im Regelfall den Zusatz von üblichen Additiven wie beispielsweise Rheologie-Additive, Hydrophobierungsmittel, Entschäumer, Filmbildehilfsmittel, Fasern, Netz- und Dispergiermittel, Konservierungsmittel, Farbmittel, etc.

Erfindungsgemäße, verarbeitungsfertige Beschichtungsmassen (Endbeschichtungen wie Anstrichfarben (Innen + Außen) und Putze) können folgende Zusammensetzungen haben:

| | | |
|---|---|---|
| *1 - 40 Gew.%* | *organische und*/*oder anorganische Bindemittel (gerechnet als Feststoff),* | *bvzgt. 2 - 30 Gew%, bvzgter 2,5 - 25 Gew.%* |
| *10 - 87,5 Gew.%* | *silikatische, carbonatische und* / *oder sulfatische Füllstoffe* / *Pigmente* | *bvzgt. 20 - 85 Gew%, bvzgter 25 - 80 Gew.%* |
| *1 - 30 Gew.%* | *sulfidischer Halbleiter* | *bvzgt. 2 - 25 Gew%, bvzgter 3 - 20 Gew.%* |
| *0,1 - 10 Gew.%* | *Additive* | *bvzgt. 0,2 - 8 Gew%, bvzgter 0,5 -* 6 *Gew.%* |

| | | |
|---|---|---|
| *10 - 60 Gew.* % | | *Wasser* |

Der sulfidische Halbleiter umfasst vorzugsweise ZnS, mehr bevorzugt besteht er aus ZnS.

Der Begriff *"verarbeitungsfertige Beschichtungsmassen"* bezieht sich dabei auf das Beschichtungsmaterial in anwendungsfähiger Form. Dabei liegen die festen Bestandteile des Beschichtungsmaterials üblicherweise dispergiert in einem flüssigen Medium, z.B. Wasser vor. Typischerweise enthält das erfindungsgemäße Beschichtungsmaterial 10 Gew.% bis 60 Gew.% Wasser.

Das Beschichtungsmaterial der vorliegenden Erfindung kann in verschiedenen Anwendungsformen eingesetzt werden. Beispielsweise kann das Beschichtungsmaterial als eine Anstrichfarbe, insbesondere Fassadenfarbe, ein Lack oder ein Putz vorliegen. Das Beschichtungsmaterial der vorliegenden Erfindung eignet sich insbesondere zum Einsatz im Außenbereich, z.B. zum Streichen, Bemalen, Verputzen oder Beschichten von Gebäudeteilen, wie etwa Betonwänden, Ziegelwänden oder anderen Wänden, Gemäuern, usw., aber auch in lichtbeaufschlagten Innenbereichen.

Die vorliegende Erfindung betrifft auch die Verwendung eines erfindungsgemäßen Beschichtungsmaterials zum Abbau von in Atmosphären- und/oder Umgebungsluft enthaltenen Schadgasen, insbesondere Methan, homologen Kohlenwasserstoffen sowie Stickoxiden, wie etwa NO oder NO₂.

In einer bevorzugten Ausführungsform wird dabei das Beschichtungsmaterial der vorliegenden Erfindung im Außenbereich verwendet.

Die vorliegende Erfindung wird im Folgenden unter Bezug auf spezielle Arbeitsbeispiele detaillierter beschrieben. Die angeführten Arbeitsbeispiele dienen lediglich der Illustration. Andere spezielle Ausführungsformen werden für den Fachmann auf Basis der vorliegenden Offenbarung offensichtlich sein.

### Beispiele

### Bestimmung der photokatalytischen Aktivität

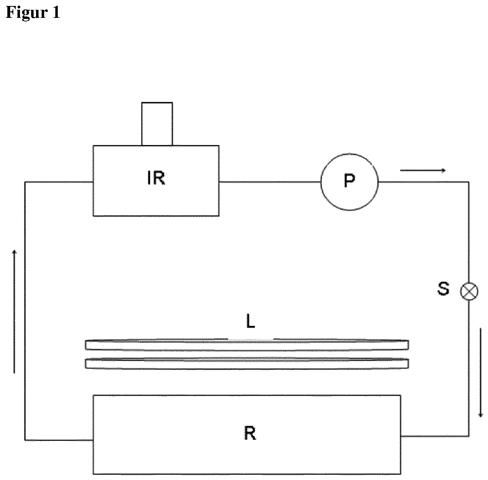

Die photokatalytische Aktivität wurde in einem Closed-loop-Verfahren mit simultaner FTIR-Reaktionsverfolgung bestimmt. Der schematische Aufbau der verwendeten Messapparatur ist in Figur 1 gezeigt. Die Apparatur ist ein geschlossener Kreislauf, der aus folgenden Komponenten besteht:
- Reaktor (R) aus Edelstahl (Grundfläche 0,2 m x 1 m) mit einer Glasabdeckung. In den Reaktor werden die Probenkörper (Beschichtungsaufzüge auf inertem Untergrund) eingelegt.
- Leuchtkörper, Belichtungsapparatur (L)
- FTIR-Spektrometer mit Langweggasmesszelle (IR)
- regulierbare Pumpe (P) zur Zirkulation
- hochdichte Edelstahl-Verbindungsschläuche (nicht in Figur 1 gezeigt)

Die Einbringung des Methans erfolgt über ein Septum (S). Die Anfangskonzentration des Methans bei Start der Belichtung wird auf ca. 100 ppm eingestellt. Das Gesamtvolumen des Systems beträgt 9,5 L. Zur Messung wird die Luft im geschlossenen Kreislauf im Kreis umgewälzt. Das FTIR-Spektrometer als Detektor nimmt nach Zugabe des Methans in gegebenen Zeitabständen komplette Spektren vom Bereich 4000 cm-1 bis 700 cm-1 auf. Aus diesen Momentaufnahmen der Zusammensetzung der Atmosphäre im System kann kontinuierlich und ohne Zeitverzögerung die Konzentration des Methans in der Gasphase bestimmt werden. Die Belichtung erfolgt mit UV-Leuchtröhren vom Typ Philips TL 40W/05.

### Vergleichsbeispiel 1: herkömmliche Silikonharz-Fassadenfarbe mit TiO₂-Photokatalysator

30 Gew.% Wasser
8,0 Gew.% Silikonharz (Feststoffgehalt: ca. 50 Gew.%)
11,0 Gew.% Rein-Acrylat Bindemittel (Feststoffgehalt: ca. 50 Gew.%)
10,0 Gew.% photokatalytisch aktives TiO₂ (Anatas)
10,0 Gew.% Weißpigment TiO₂ (Rutil)
27,0 Gew.% Silikatische und carbonatische Füllstoffe
4,0 Gew.% übliche Additive (Netz- u. Dispergiermittel, Verdicker, Entschäumer, Filmbildehilfsmittel, etc.)
Die PVK liegt bei 61 %.
Die PhVK liegt bei 10%.

### Ausführungsbeispiel 1: Silikonharz-Fassadenfarbe mit sulfidischem Halbleiter

30 Gew.% Wasser
8,0 Gew.% Silikonharz (Feststoffgehalt: ca. 50 Gew.%)
11,0 Gew.% Rein-Acrylat Bindemittel (Feststoffgehalt: ca. 50 Gew.%)
10,0 Gew.% sulfidischer Halbleiter: Zinksulfid
10,0 Gew.% SiO₂
27,0 Gew.% Silikatische und carbonatische Füllstoffe
4,0 Gew.% übliche Additive (Netz- u. Dispergiermittel, Verdicker, Entschäumer, Filmbildehilfsmittel, etc.)
Die PVK liegt bei 63 %.
Die PhVK liegt bei 10%

### Vergleichsbeispiel 2: herkömmliche Innen-Dispersionsfarbe mit TiO₂-Photokatalysator

37 Gew.% Wasser
12,0 Gew.% Styrol-Acrylat Bindemittel (Feststoffgehalt: ca. 50 Gew.%)
10,0 Gew.% photokatalytisch aktives TiO₂ (Anatas)
5,0 Gew.% Weißpigment TiO₂ (Rutil)
33,0 Gew.% Silikatische und carbonatische Füllstoffe
3,0 Gew.% übliche Additive (Netz- u. Dispergiermittel, Verdicker, Entschäumer, Konservierungsmittel, etc.)
Die PVK liegt bei 73 %.
Die PhVK liegt bei 11%.

### Ausführungsbeispiel 2: Innen-Dispersionsfarbe mit sulfidischem Halbleiter

37 Gew.% Wasser
12,0 Gew.% Styrol-Acrylat Bindemittel (Feststoffgehalt: ca. 50 Gew.%)
10,0 Gew.% sulfidischer Halbleiter: Zinksulfid
5,0 Gew.% SiO₂
33,0 Gew.% Silikatische und carbonatische Füllstoffe
3,0 Gew.% übliche Additive (Netz- u. Dispergiermittel, Verdicker, Entschäumer, Konservierungsmittel, etc.)
Die PVK liegt bei 74 %.
Die PhVK liegt bei 11%.

### Ausführungsbeispiel 3: Innen-Dispersionsfarbe mit sulfidischem Halbleiter

44 Gew.% Wasser
12,0 Gew.% Styrol-Acrylat Bindemittel (Feststoffgehalt: ca. 50 Gew.%)
3,0 Gew.% sulfidischer Halbleiter: Zinksulfid
5,0 Gew.% SiO₂
33,0 Gew.% Silikatische und carbonatische Füllstoffe
3,0 Gew.% übliche Additive (Netz- u. Dispergiermittel, Verdicker, Entschäumer, Konservierungsmittel, etc.)
Die PVK liegt bei 72 %.
Die PhVK liegt bei 3 %.

Die Formulierungen gemäß der Vergleichs- und Ausführungsbeispiele können durch Vermischen der genannten Komponenten in den angegebenen Mengen auf an sich bekannte Weise hergestellt werden. Die Formulierungen wurden jeweils auf Aluminiumfolie aufgetragen und unter normalen Raumbedingungen getrocknet. Vor der Bestimmung der photokatalytischen Aktivität wurden die Proben 120 Stunden lang vorbelichtet mit einer Intensität von 10 W/m² UV-A. Die Proben wurden dabei noch alle 24 Stunden mit destilliertem Wasser befeuchtet und abgespült. Die Belichtung erfolgte mit einer Intensität von 11,2 W/m² (im UV-A - Bereich von 315nm - 380 nm).

Die photokatalytischen Methan-Abbauraten der Vergleichsbeispiele 1 und 2 konnten im Rahmen der Messgenauigkeit nicht bestimmt werden. Die photokatalytische Abbaurate des Ausführungsbeispiels 1 betrug durchschnittlich ca. 105 µg Methan m⁻² h⁻¹. Die photokatalytische Abbaurate des Ausführungsbeispiels 2 betrug durchschnittlich ca. 140 µg Methan m⁻² h⁻¹. Die photokatalytische Abbaurate des Ausführungsbeispiels 3 betrug durchschnittlich ca. 48 µg Methan m⁻² h^{-1.}

Ferner wurden Proben des Vergleichsbeispiels 1 und des Ausführungsbeispiels 1 einer natürlichen Bewitterung ausgesetzt (45°-Südauslage in Süddeutschland). Innerhalb eines Jahres Jahr wies das Vergleichsbeispiel 1 starke Oberflächenveränderungen auf und kreidete stark bis sehr stark. Beim Ausführungsbeispiel 1 dagegen konnten kaum Oberflächenveränderungen und keine Kreidungserscheinungen festgestellt werden. Im Innenbereich zeigen erfindungsgemäße Beschichtungen in lichtbeaufschlagten Bereichen wie Fensterlaibungen und unter starker künstlicher Beleuchtung im Vergleich mit TiO₂-basierten Beschichtungen eine ebenso verringerte Neigung zur Kreidung.

## Patentansprüche

1. Beschichtungsmaterial, umfassend
(a) mindestens ein organisches Bindemittel,
(b) mindestens einen sulfidischen photokatalytisch wirksamen Halbleiter und
(c) mindestens einen Füllstoff und/oder ein Pigment, wobei
(d) das Beschichtungsmaterial im Wesentlichen kein TiO₂ enthält.

2. Beschichtungsmaterial gemäß Anspruch 1, wobei der sulfidische Halbleiter Zinksulfid (ZnS) umfasst.

3. Beschichtungsmaterial gemäß Anspruch 1 oder 2, wobei der sulfidische Halbleiter synthetisches Zinksulfid umfasst.

4. Beschichtungsmaterial gemäß einem der Ansprüche 1 bis 3, wobei der sulfidische Halbleiter ein natürlich vorkommendes, ggf. aufgereinigtes Zinksulfid umfasst.

5. Beschichtungsmaterial gemäß einem der vorstehenden Ansprüche, wobei das organische Bindemittel ausgewählt ist aus Polymerdispersionen, Redispergiermitteln, Alkydharzen, Polyvinylacetaten, Vinylacetat-Ethylen, Vinylacetat-Vinylester, Polyurethan-Dispersionen, OH- funktionalen Dispersionen, Epoxidharzen, Silikonharzen, Silanen, Siloxanen, Polysiloxanen und Mischungen davon, wobei das organische Bindemittel stärker bevorzugt ausgewählt ist aus Mischpolymerisaten aus Acryl- und Methacrylsäureestern mit Styrol oder Ethylen-Vinylestern, Acrylaten und Styrolacrylaten., wobei ein ggf. zusätzlich vorhandenes anorganisches Bindemittel ausgewählt ist aus Wasserglas, insbesondere Kaliwasserglas und Sol-Silikat.

6. Beschichtungsmaterial gemäß einem der vorhergehenden Ansprüche, umfassend:
| | | |
|---|---|---|
| *1 - 40 Gew.%* | *organische und* / *oder anorganische Bindemittel (gerechnet als Feststoff),* | *bvzgt. 2 - 30 Gew%, bvzgter 2,5 - 25 Gew. %* |
| *10 - 87,5 Gew.*% | *silikatische, carbonatische und* / *oder sulfatische Füllstoffe* / *Pigmente* | *bvzgt. 20 - 85 Gew%, bvzgter 25 - 80 Gew.%* |
| *1 - 30 Gew.*% | *sulfidischer Halbleiter* | *bvzgt. 2 - 25 Gew%, bvzgter 3 - 20 Gew. %* |
| *0,1 - 10 Gew.*% | *Additive* | *bvzgt. 0,2 - 8 Gew%, bvzgter 0,5 - 6 Gew.%* |
| *10 - 60 Gew.* % | *Wasser* | |

7. Beschichtungsmaterial gemäß einem der Ansprüche 1 bis 6 wobei das Beschichtungsmaterial eine Anstrichfarbe, insbesondere Fassadenfarbe, ein Lack oder ein Putz ist, insbesondere zum Einsatz im Außenbereich.

8. Verwendung eines Beschichtungsmaterials gemäß einem der Ansprüche 1 bis 7 zum Abbau von in Atmosphären- und/oder Umgebungsluft enthaltenen Schadgasen einschließlich Methan, unpolarer homologer Kohlenwasserstoffe und Stickoxide, einschließlich NO und NO₂.

9. Verwendung gemäß Anspruch 8, wobei das Beschichtungsmaterial im Außenbereich eingesetzt wird.
